# EUROPÄISCHE PATENTSCHRIFT

(11) **EP 1 765 899 B1**
(45) Veröffentlichungstag und Bekanntmachung des Hinweises auf die Patenterteilung: **04.05.2011**
(21) Anmeldenummer: 05755417.2
(22) Anmeldetag: 22.06.2005
(51) Int. Cl.: C08G 18/10, C08G 18/83, C08G 18/73, C08G 18/48

(54) **VERFAHREN ZUR HERSTELLUNG AMINOFUNKTIONELLER POLYURETHAN-PREPOLYMERE**
METHOD FOR PRODUCING AMINO-FUNCTIONAL POLYURETHANE PREPOLYMERS
PROCEDE POUR PRODUIRE DES PREPOLYMERES DE POLYURETHANNES AMINOFONCTIONNELS

(30) Priorität: 05.07.2004 DE 102004032417
(43) Veröffentlichungstag der Anmeldung: 28.03.2007
(73) Patentinhaber: Bayer MaterialScience AG, 51368 Leverkusen (DE)
(72) Erfinder: MAGER, Michael, 51375 Leverkusen (DE)
(86) Internationale Anmeldenummer: PCT/EP2005/006741
(87) Internationale Veröffentlichungsnummer: WO 2006/002811

(56) Entgegenhaltungen:
- DE-A- 3 035 639
- DE-A1- 2 948 419
- DE-B- 1 270 046
- PATENT ABSTRACTS OF JAPAN Bd. 011, Nr. 053 (C-404), 19. Februar 1987 (1987-02-19) & JP 61 215397 A (TOSHIBA CORP), 25. September 1986 (1986-09-25) in der Anmeldung erwähnt
- PATENT ABSTRACTS OF JAPAN Bd. 011, Nr. 273 (C-445), 4. September 1987 (1987-09-04) & JP 62 074919 A (TOSHIBA CORP), 6. April 1987 (1987-04-06) in der Anmeldung erwähnt

## Beschreibung

Die vorliegende Erfindung betrifft ein Verfahren zur Herstellung aminofunktioneller Polyurethan-Prepolymere. Diese eignen sich z.B. zur Modifizierung und Herstellung von Epoxidharzen und Polyurethanen.

Beschichtungen aus Epoxidharzen zeichnen sich durch hohe Härte, gute Chemikalienbeständigkeit und hervorragende Metallhaftung aus. Zur Herstellung lösemittelfreier Epoxidharz-Formulierungen werden in der Regel niedermolekulare Epoxide in Kombination mit monomeren Diaminen eingesetzt, da höhermolekulare Komponenten eine für die Verarbeitung viel zu hohe Viskosität ergeben würden. Die aus diesen Epoxidharz-Formulierungen hergestellten Beschichtungen sind aufgrund der hohen Vemetzungsdichte dann aber meist zu spröde und für den praktischen Einsatz ungeeignet.

Durch Zusatz geeigneter Weichmacher kann die Sprödigkeit der genannten Epoxidharze reduziert werden, jedoch erhält man dadurch ein Dreistoffsystem verbunden mit einem entsprechend höheren Aufwand bei der Formulierung.

Darüber hinaus sind die üblicherweise eingesetzten monomeren Diamine aufgrund ihrer Flüchtigkeit schwer zu handhabende Stoffe, die besondere Schutzmaßnahmen erfordern.

Es wurde daher vorgeschlagen, zur Flexibilisierung derartiger Epoxidharze aminofunktionelle Polyurethan-Prepolymere einzusetzen, welche beispielsweise durch Hydrolyse der entsprechenden Ketimine erhalten werden können (US-A 3 993 708, DE-A 2 546 536). Weitere Verfahren zur Herstellung aminofunktioneller Polyurethan-Prepolymere sind darüber hinaus die Hydrolyse isocyanatfunktioneller Polyurethan-Prepolymere in Gegenwart starker Basen (DE-A 2 948 419) oder in Mischungen von Wasser mit speziellen Lösungsmitteln wie beispielsweise Dimethylformamid (DMF) (EP-A 0 219 035), die Umsetzung NCO-funktioneller Prepolymere mit tertiären Alkoholen und anschließendem thermischen Abbau (DE-A 1 270 046) sowie die Hydrogenolyse von O-Benzyloxyurethanen (DE-A 3 035 639).

Die genannten Verfahren weisen jedoch den Nachteil auf, dass Kopplungsprodukte, wie z.B. Ketone im Ketimin-Verfahren, erst aufwendig entfernt oder das eigentliche Produkt aus wässriger Phase extrahiert werden muss (Hydrolyse-Verfahren). Während die Thermolyse tertiärer Alkylurethane eine wenig schonende Methode ist und zu stark gefärbten Produkten führt, wird bei der Hydrogenolyse von O-Benzyloxyurethanen das Blockierungsmittel zu Toluol und Kohlendioxid zersetzt und kann daher nicht erneut in die Reaktion eingesetzt werden.

In JP-A 61215397 werden Umsetzungsprodukte von organischen Isocyanaten (z.B. Toluylendiisocyanat) und Arylsilanolen wie Triphenylsilanol beschrieben, welche in der üblichen Weise als (reversibel) blockierte Isocyanate eingesetzt werden können.

JP-A 62074919 beschreibt ebenso mit Triphenylsilanol blockierte, aliphatische Isocyanate (z.B. 1,6-Hexandiisocyanat), welche in Kombination mit bestimmten Katalysatoren als Härter für Epoxide eingesetzt werden können. Über die *in situ* Bildung oder gar Herstellung von Aminen wurde dabei nicht berichtet.

Die Möglichkeit des hydrolytischen Abbaus der beschriebenen Silylurethane, also die Reaktion der Silylurethane mit Wasser unter Abspaltung von Silanol und CO₂, wurde in den beiden genannten Anmeldungen nicht erkannt.

Es wurde nun gefunden, dass aminofunktionelle Polyurethan-Prepolymere glatt und unter milden Bedingungen aus den entsprechenden silylurethangruppenhaltigen Prepolymeren durch hydrolytischen Abbau erhalten werden können. Die erhaltenen Produkte zeichnen sich durch eine geringe Farbe und niedrige Viskosität aus.

Gegenstand der Erfindung ist daher ein Verfahren zur Herstellung aminofunktioneller Polyurethan-Prepolymere, bei dem
a) zunächst ein NCO-funktionelles Polyurethan-Prepolymer durch Reaktion von einem oder mehreren Di- und/oder Polyisocyanaten mit mindestens einer isocyanatreaktiven Verbindung einer Funktionalität von mindestens 1,5 hergestellt wird und danach die freien NCO-Gruppen mit
b) mindestens einer, eine oder mehrere Silanol-Gruppen aufweisenden Verbindung, zu den entsprechenden Silylurethanen umgesetzt werden, welche schließlich
c) durch Hydrolyse und/oder Alkoholyse unter Decarboxylierung zu Aminen abgebaut werden.

Zur Herstellung der Prepolymere können in a) prinzipiell alle aliphatischen, cycloaliphatischen, aromatischen oder heterocyclischen organischen Di- und Polyisocyanate mit mindestens zwei Isocyanatgruppen pro Molekül sowie deren Gemische eingesetzt werden. Beispielhaft seien aliphatische Di- oder Triisocyanate wie z.B. 1,4-Butandiisocyanat, 1,5-Pentandiisocyanat, 1,6-Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat) (Desmodur^{®}W, Bayer MaterialScience AG, Leverkusen), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI) oder aromatische Polyisocyanate wie z.B. 1,5-Naphthalendiisocyanat, 4,4'-, 2,4'- und 2,2'-Diisocyanatodiphenylmethan (MDI) bzw. Roh-MDI, Diisocyanatomethylbenzol (Toluylendiisocyanat, TDI), insbesondere das 2,4- und das 2,6-Isomere und technische Gemische der beiden Isomeren sowie 1,3-Bis(isocyanatomethyl)benzol (XDI) genannt.

Bevorzugte in a) eingesetzte Verbindungen sind aliphatische Polyisocyanate wie 1,4-Butandiisocyanat, 1,5-Pentandiisocyanat, 1,6-Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat) (Desmodur^{®}W, Bayer MaterialScience AG, Leverkusen), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI).

Ebenfalls im Sinne der Erfindung können in a) die an sich bekannten Folgeprodukte der vorstehend genannten Isocyanate mit Biuret-, Isocyanurat-, Iminooxadiazindion-, Uretdion-, Allophanat und/oder Urethanstruktur verwendet werden.

Als isocyanatreaktive Verbindungen werden in a) die dem Fachmann an sich aus der Polyurethanchemie bekannten Polyhydroxy-Verbindungen einer OH-Funktionalität > 1,5 verwendet, wie beispielsweise niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit) aber auch höhermolekulare Polyetherpolyole, Polyesterpolyole, Polycarbonatpolyole sowie Polythioetherpolyole. Bevorzugte Polyhydroxyverbindungen sind Substanzen der vorstehend genannten Art auf Polyetherbasis.

Unter "niedermolekular" im Rahmen der Erfindung werden zahlenmittlere Molekulargewichte unter 500 g/mol, bevorzugt 62-499 g/mol verstanden. Unter "höhermolekular" im Sinne der Erfindung werden zahlenmittlere Molekulargewichte von 500-100 000 g/mol verstanden.

Besonders bevorzugte isocyanatreaktive Verbindungen in a) sind Polyetherpolyole der vorstehend genannten Art einer OH-Funktionalität ≥ 1,9, bevorzugt ≥ 1,95, und eines Molekulargewichtsbereichs von 500 bis 20.000 g/mol, bevorzugt 1.000 bis 12.000 g/mol, besonders bevorzugt 2.000 bis 6.000 g/mol, die in an sich bekannter Weise durch Alkoxylierung von geeigneten Starter-Molekülen zugänglich sind.

Ganz besonders bevorzugte isocyanatreaktive Verbindungen sind Polyetherpolyole der vorstehend genannten Art mit einem Gehalt an ungesättigten Endgruppen von kleiner oder gleich 0,02 Milliäquivalenten pro Gramm Polyol, bevorzugt kleiner oder gleich 0,015 Milliäquivalenten pro Gramm Polyol, besonders bevorzugt kleiner oder gleich 0,01 Milliäquivalenten pro Gramm Polyol (Bestimmungsmethode ASTM D2849-69) sowie einer Molekulargewichtsverteilung (Polydispersität; PD = M_{w}/Mₙ) von 1,0 bis 1,5. Diese sind in an sich bekannter Weise z.B. nach US-A 5 158 922 (z.B. Beispiel 30) oder EP-A 0 654 302 (S. 5, Z. 26 bis S. 6, Z. 32) durch Alkoxylierung von geeigneten Starter-Molekülen, insbesondere unter Verwendung von Doppelmetallcyanid-Katalysatoren (DMC-Katalyse), herstellbar.

Geeignete Starter-Moleküle für die Herstellung der genannten Polyetherpolyole sind beispielsweise einfache, niedermolekulare Polyole der vorstehend genannten Art, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Starter-Moleküle zur Herstellung der Polyetherpolyole sind Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren oder niedermolekulare Ethoxylierungs- oder Propoxylierungsprodukte derartiger Polyole. Selbstverständlich können auch beliebige Gemische der vorstehend genannten Verbindungen eingesetzt werden.

In b) des erfindungsgemäßen Verfahrens werden Silanole der allgemeinen Formel (I)

(HO)ₐSiR₄₋ₐ (I)

eingesetzt, wobei
- R: für gleiche oder verschiedene, gegebenenfalls verzweigte und/oder substituierte C₁-C₈- Alkyl- oder Phenylreste steht und
- a: gleich 1 oder 2 ist.

Bevorzugt sind Silanole der Formel (I), wobei R die vorstehend definierte Bedeutung hat und a gleich 1 ist.

Ganz besonders bevorzugt wird in c) zur Silylurethanbildung Triphenylsilanol eingesetzt.

Im erfindungsgemäßen Verfahren werden die in a) eingesetzten Polyisocyanate bezogen auf die isocyanatreaktiven Gruppen der ebenfalls in a) eingesetzten isocyanatreaktiven Verbindungen stets im Überschuss eingesetzt. Nach beendeter Reaktion können die unreagierten Polyisocyanate gegebenenfalls, beispielsweise destillativ durch Dünnschichtdestillation, aus dem Reaktionsgemisch entfernt werden.

Bevorzugt beträgt in a) das Molverhältnis der isocyanatreaktiven Gruppen der isocyanatreaktiven Verbindungen zu den NCO-Gruppen der Di- oder Polyisocyanate 1 : 1,5 bis 1 : 20, besonders bevorzugt 1 : 1,8 bis 1 : 5 und ganz besonders bevorzugt 1 : 1,95 bis 1 : 2,05.

Die Herstellung der NCO-gruppenhaltigen Polyurethan-Prepolymere erfolgt im Allgemeinen bei 20 bis 140°C, bevorzugt bei 40 bis 100°C.

Gegebenenfalls kann die Umsetzung auch in Gegenwart gebräuchlicher (Urethanisierungs-) Katalysatoren durchgeführt werden, wobei Zinnverbindungen wie Dibutylzinndilaurat, Zinndioctoat und tertiäre Amine wie 1,4-Diazabicylooctan (DABCO) beispielhaft genannt seien.

Darüber hinaus kann die Herstellung in geeigneten Lösungsmitteln durchführt werden, wobei vorzugsweise inerte Lösungsmittel wie Ethylacetat, Butylacetat, Methoxypropylacetat, Methylethylketon, Methylisobutylketon, Toluol, Xylol, aromatische oder (cyclo-) aliphatische Kohlenwasserstoffgemische oder beliebige Gemische der genannten eingesetzt werden können. Bevorzugt wird die Umsetzung jedoch ohne die Verwendung von Lösungsmitteln durchgeführt.

Die anschließende Herstellung der Silylurethane in Schritt b) erfolgt durch Umsetzung der vorstehend beschriebenen, aus a) erhaltenen NCO-Gruppen aufweisenden Polyurethan-Prepolymere mit den Silanolen.

Die Menge, der in b) eingesetzten Silanole, wird in der Regel dabei so gewählt, dass alle freien Isocyanatgruppen des aus a) erhaltenen Prepolymers zum Silylurethan umgesetzt werden (Molverhältnis Si-OH-Gruppen zu NCO-Gruppen mindestens gleich 1). Ein geringer Überschuss des Silanols kann zweckmäßig sein, um eine vollständige Reaktion aller Isocyanatgruppen zu gewährleisten. In der Regel beträgt der Überschuss aber nicht mehr als 20 Mol-%, bevorzugt nicht mehr als 15 Mol-% und besonders bevorzugt nicht mehr als 10 Mol-%, bezogen auf die zu silylierenden Isocyanatgruppen.

Die Umsetzungsreaktion der Prepolymere mit den Silanolen der Formel (I) wird in prinzipiell gleicher Weise wie die bereits beschriebenen Prepolymerherstellung durchgeführt. Das bedeutet, dass bei Temperaturen von typischerweise 20 bis 140°C, gegebenenfalls in Gegenwart gebräuchlicher Urethanisierungskatalysatoren der genannten Art sowie gegebenenfalls unter Verwendung geeigneter (inerter) Lösungsmittel gearbeitet wird.

Im letzten Schritt erfolgt dann die Hydrolyse oder Alkoholyse, wobei die Silylurethane zu den entsprechenden aminofunktionellen Polyurethan-Prepolymeren unter Decarboxylierung abgebaut werden.

Zum Abbau der Silylurethane wird Wasser oder ein Alkohol in der Regel mindestens stöchiometrisch, d.h. im Molverhältinis 1 : 1 in Bezug auf die Silylurethangruppen, bevorzugt im Überschuss zugesetzt.

Als Alkohol sind prinzipiell alle primären, sekundären und tertiären aliphatischen C₁-C₃₀-Alkohole geeignet. Bevorzugt sind dabei jedoch primäre C₁-C₈-Alkohole. Als Beispiele seien Methanol, Ethanol, Propanol, n-Butanol, n-Pentanol und Hexanol genannt.

Bei der Hydrolyse werden die eingangs eingesetzten Silanole zurückgebildet, welche dann wieder erneut in die Silylurethanbildung eingesetzt werden können. Im Falle der Alkoholyse werden zunächst Alkoxy-Organosilane gebildet, welche mit Wasser erst wieder in die entsprechenden Silanole überführt werden müssen, bevor sie erneut in das erfindungsgemäße Verfahren eingesetzt werden können.

In einer bevorzugten Ausführungsform wird das Di- oder Polyisocyanat in einem geeigneten Reaktionsgefäß vorgelegt und gegebenenfalls unter Rühren auf 60 bis 100°C erwärmt. Nach Erreichen der gewünschten Temperatur wird dann unter Rühren die isocyanatreaktive Komponente zugegeben und solange gerührt, bis der theoretische NCO-Gehalt des nach der gewählten Stöchiometrie zu erwartenden Polyurethan-Prepolymers erreicht oder geringfügig unterschritten ist. Anschließend wird bei einer Temperatur in den vorstehend bei der Prepolymerbildung genannten Bereichen das Silanol aus b) zugesetzt und solange erwärmt, bis der Gehalt an freien Isocyanatgruppen kleiner als 0,5 Gew.%, bevorzugt kleiner als 0,2 Gew.%, besonders bevorzugt kleiner als 0,1 Gew.%, ist. Das so erhaltene, blockierte Polyurethan-Prepolymer wird gegebenenfalls in einem Lösungsmittel gelöst und dann bei Temperaturen von 0 bis 30°C durch Zugabe stöchiometrischer Mengen Wasser hydrolysiert. Das (zurückgebildete) Silanol kann danach ebenso wie das gegebenenfalls eingesetzte Lösungsmittel mit geeigneten Verfahren (Filtration, Destillation, o.ä.) aus dem Produkt abgetrennt werden.

Alternativ kann das erfindungsgemäße Verfahren auch so geführt werden, dass zuerst die isocyanatreaktiven Verbindungen vorgelegt und dann mit den Polyisocyanaten vermischt werden.

Die erfmdungsgemäß hergestellten aminofunktionellen Polyurethan-Prepolymere zeichnen sich durch eine besonders geringe Farbe und niedrige Viskosität aus. Typischerweise haben sie Viskositäten von 500 bis 200.000 mPas (23°C; gemessen mit einem Rotationsviskosimeter), bevorzugt 500 bis 50.000 mPas, besonders bevorzugt 500 bis 10.000 mPas.

Darüber hinaus weisen die erfindungsgemäß erhältlichen aminofunktionellen Polyurethan-Prepolymere typischerweise zahlenmittlere Molekulargewichte von 500 bis 25000 g/mol, bevorzugt 1000 bis 10000 g/mol und besonders bevorzugt 1000 bis 5000 g/mol auf.

Daher lassen sie sich beispielsweise besonders gut in lösemittelarmen oder -freien Reaktivsystemen einsetzen, da sie ihnen aufgrund ihrer Viskosität besonders vorteilhafte Verarbeitungseigenschaften, wie z.B. gute Fließfähigkeit oder Verlaufseigenschaften, verleihen, so dass besonders hochwertige und gleichmäßige Beschichtungen oder Verklebungen erhalten werden können.

### Beispiele

### Vorbemerkung:

Soweit nicht abweichend angegeben sind alle Prozentangaben als Gewichtsprozent zu verstehen.

Die Bestimmung der NCO-Gehalte der Isocyanat-funktionellen Prepolymere erfolgte mittels Rücktitration von im Überschuß zugesetztem Di-n-butylamin mit 0,1 N Salzsäure unter Verwendung von Bromphenolblau als Indikator, wobei die Probe in ca. 50 ml Aceton gelöst wurde.

Bei der Umsetzung mit Triphenylsilanol wurde die Reaktion mittels Infrarotspektroskopie (IR) verfolgt (NCO-Bande bei 2270 cm⁻¹)

Die Bestimmung der Amin-Gehalte erfolgte durch Titration mit 0,1 N Salzsäure, wobei die Probe in ca. 50 ml Aceton gelöst wurde, unter Verwendung von Bromphenolblau als Indikator.

### Beispiel 1:

a) Herstellung des Isocyanat-funktionellen Polyurethan-Prepolymers:
   Unter Rühren wurden Hexamethylendiisocyanat (10 Val) und ein Polypropylenglycol (1 Val), welches mittels DMC-Katalyse (Basen-frei) hergestellt worden war und ein mittleres Molekulargewicht von 2000 g/mol sowie eine OH-Zahl 56 aufwies, solange auf 100°C erwärmt, bis der theoretische NCO-Gehalt von 20,7 Gew.-% erreicht war. Nach Zugabe von 200 ppm Dibutylphosphat wurde das überschüssige Hexamethylendiisocyanat dann mittels Dünnschichtdestillation (140°C, ca. 0,5 mbar) entfernt und es wurde ein isocyanatfunktionelles Prepolymer mit einem NCO-Gehalt von 3,3 Gew.-% erhalten.
b) Blockierung mit Triphenylsilanol:
   82,2 g des nach a) erhaltenen NCO-funktionellen Prepolymers wurden zusammen mit 17,8 g Triphenylsilanol unter Rühren auf 75°C erwärmt. Dann wurden 100 ppm Dibutylzinn(II)dilaurat zugegeben und die Reaktionsmischung solange gerührt, bis im IR-Spektrum keine NCO-Bande mehr sichtbar war.
c) Hydrolyse zum aminofunktionellen Polyurethan-Prepolymer:
   1,74 g des nach b) erhaltenen Produktes wurden unter Rühren in 100 ml Aceton gelöst und mit einem großen Überschuss Wasser (ca. 10 ml) versetzt. Die Titration ergab einen NH₂-Gehalt von 0,98 Gew.-%.
   (Theoretischer NH₂-Gehalt: 1,03 %, entsprechend einem Umsatz der Silylurethangruppenvon 95 %).

### Beispiel 2:

a) Herstellung des Isocyanat-funktionellen Polyurethan-Prepolymers und Blockierung mit Triphenylsilanol:
   17,2 g Hexamethylendiisocyanat und 20 mg Dibutylzinn(II)dilaurat wurden unter Rühren auf 80°C erwärmt. Danach wurden innerhalb von 5 Stunden 204,5 g eines difunktionellen Polyproplylenglycols zugegeben, welcher mittels DMC-Katalyse (Basen-frei) hergestellt worden war und ein mittleres Molekulargewicht von 4000 g/mol sowie eine OH-Zahl 28 aufwies. Nach Erreichen eines NCO-Gehaltes von 1,54 % (theoretischer NCO-Gehalt:
      1,9 %) wurden schließlich noch 28,3 g Triphenylsilanol und weitere 20 mg Dibutylzinn-(II)dilaurat zugegeben und die Reaktionsmischung solange bei 80°C gerührt, bis im IR keine NCO-Bande mehr erkennbar war.
b) Hydrolyse zum aminofunktionellen Polyurethan-Prepolymer:
   Die in der unten stehenden Tabelle angegebene Menge des Silylurethans aus a) wurde unter Rühren in soviel Aceton gelöst, dass eine 25 %ige Lösung erhalten wurde; danach wurde bei Umgebungstemperatur die angegebene Menge entionisiertes Wasser zugegeben. Nach 15 Minuten Rühren wurde der NH₂-Gehalt bestimmt, danach wurde die Probe am Rotationsverdampfer vom Aceton befreit und nochmals der NH₂-Gehalt bestimmt. Die Ergebnisse finden sich ebenso in Tabelle 1.

**Tabelle 1**

| Silylurethan aus a) [g] | entionisiertesWasser | Val-Verhältnis | NH₂-Gehalt [%] / 25 %ig | NH₂-Gehalt [%] / pur |
|---|---|---|---|---|
| 8,22 | 0,24 | 1:5 | 0,13 | 0,49 |
| 37,45 | 0,22 | 1:1 | 0,13 | 0,49 |
| 37,42 | 0,33 | 1:1,5 | 0,13 | 0,47 |

| | | | | |
|---|---|---|---|---|
| (Theoretischer NH₂-Gehalt: 0,52 %, entsprechend einem Umsatz der Silylurethangruppen von 94%). | | | | |

### Beispiel 3:

a) Herstellung eines Isocyanat-funktionellen Polyurethan-Prepolymers und Blockierung mit Triphenylsilanol:
   262,0 g eines Polyethylenglycols mit einer OH-Zahl von 110 und eines Molgewichts von 1000 g/mol wurden zunächst 8 Stunden unter Vakuum (20 mbar) bei 100°C gerührt, um Reste von Wasser zu entfernen. Danach wurden 88,0 g Hexamethylendiisocyanat zugegeben, und es wurde solange unter Rühren auf 100 °C erwärmt, bis ein NCO-Gehalt von 6,28 Gew.% erreicht war.
   Zu 349,9 g des so hergestellten Prepolymers wurden jetzt noch 50 mg Dibutylzinn(II)-dilaurat und 144,6 g Triphenylsilanol zugegeben und die Reaktionsmischung solange bei 80°C gerührt, bis im IR keine NCO-Bande mehr erkennbar war.
b) Hydrolyse zum aminofunktionellen Polyurethan-Prepolymer und Rückgewinnung des eingesetzten Triphenylsilanols:
   3,84 g des wie zuvor beschrieben hergestellten blockierten Polyurethan-Prepolymers wurden bei Umgebungstemperatur mit 150 g Wasser versetzt und 1 Stunde gerührt. Der farblose Niederschlag wurde abfiltriert, zweimal mit je 10 ml Wasser gewaschen und danach im Trockenschrank getrocknet (105°C, 4 Stunden). Es wurden 1,07 g Triphenylsilanol, entsprechend 95 % der Theorie, zurückerhalten.

Das zunächst klare Filtrat wurde am Rotationsverdampfer von flüchtigen Bestandteilen befreit, wonach schließlich 2,65 g eines farblosen Wachses erhalten wurden (99 % der Theorie). Die Titration ergab einen NH₂-Gehalt von 1,67 Gew.%, entsprechend 75 % der Theorie.

## Patentansprüche

1. Verfahren zur Herstellung aminofunktioneller Polyurethan-Prepolymere, bei dem
a) zunächst ein NCO-funktionelles Polyurethan-Prepolymer durch Reaktion von einem oder mehreren Di- und/oder Polyisocyanaten mit mindestens einer isocyanatreaktiven Verbindung einer Funktionalität von mindestens 1,5 hergestellt wird und danach die freien NCO-Gruppen mit
b) mindestens einer, eine oder mehrere Silanol-Gruppen aufweisenden Verbindung, zu den entsprechenden Silylurethanen umgesetzt werden, welche schließlich
c) durch Hydrolyse und/oder Alkoholyse unter Decarboxylierung zu Aminen abgebaut werden.

2. Verfahren zur Herstellung aminofunktioneller Polyurethan-Prepolymere gemäß Anspruch 1, **dadurch gekennzeichnet, dass** aliphatische und/oder cycloaliphatische Polyisocyanate in a) eingesetzt werden.

3. Verfahren zur Herstellung aminofunktioneller Polyurethan-Prepolymere gemäß Anspruch 1 oder 2, **dadurch gekennzeichnet, dass** in a) isocyanatreaktive Verbindungen auf Polyetherbasis eingesetzt werden.

4. Verfahren zur Herstellung aminofunktiuneller Polyurethan-Prepolymere gemäß einem der Ansprüche 1 - 3, **dadurch gekennzeichnet, dass** in b) Triphenylsilanol eingesetzt wird.

## Claims

1. Process for preparing amino-functional polyurethane prepolymers, which comprises
a) first preparing an NCO-functional polyurethane prepolymer by reacting one or more di- and/or polyisocyanates with at least one isocyanate-reactive compound having a functionality of at least 1.5 and thereafter reacting the free NCO groups with
b) at least one compound containing one or more silanol groups, to give the corresponding silylurethanes, which finally
c) are broken down by hydrolysis and/or alcoholysis with decarboxylation to give amines.

2. Process for preparing amino-functional polyurethane prepolymers according to Claim 1, **characterized in that** aliphatic and/or cycloaliphatic polyisocyanates are used in a).

3. Process for preparing amino-functional polyurethane prepolymers according to Claim 1 or 2, **characterized in that** polyether-based isocyanate-reactive compounds are used in a).

4. Process for preparing amino-functional polyurethane prepolymers according to any one of Claims 1-3, **characterized in that** triphenylsilanol is used in b).

## Revendications

1. Procédé pour la préparation de prépolymères de polyuréthane à fonctionnalité amino, dans lequel
a) on prépare d'abord un prépolymère de polyuréthane à fonctionnalité NCO par réaction d'un ou de plusieurs diisocyanates et/ou polyisocyanates avec au moins un composé réactif avec isocyanate présentant une fonctionnalité d'au moins 1,5, puis on transforme les groupes NCO libres avec
b) au moins un composé présentant un ou plusieurs groupes silanol, en silyluréthanes correspondants, qui sont enfin
c) dégradés par hydrolyse et/ou alcoolyse avec décarboxylation en amines.

2. Procédé pour la préparation de prépolymères de polyuréthane à fonctionnalité amino selon la revendication 1, **caractérisé en ce qu'**on utilise des polyisocyanates aliphatiques et/ou cycloaliphatiques dans a).

3. Procédé pour la préparation de prépolymères de polyuréthane à fonctionnalité amino selon la revendication 1 ou 2, **caractérisé en ce qu'**on utilise dans a) des composés réactifs avec isocyanate à base de polyéther.

4. Procédé pour la préparation de prépolymères de polyuréthane à fonctionnalité amino selon l'une quelconque des revendications 1 à 3, **caractérisé en ce qu'**on utilise du triphénylsilanol dans b).
